# EUROPEAN PATENT APPLICATION

(11) **EP 0 645 092 A1**
(43) Date of publication of application: **29.03.1995**
(21) Application number: 94202753.3
(22) Date of filing: 26.09.1994
(51) Int. Cl.: A21C 1/06

(54) **Continuously operating dough kneading machine**

(30) Priority: 24.09.1993 NL 9301651
(71) Applicant: SASIB BAKERY HOLLAND N.V., NL-2401 LK Alphen a/d Rijn (NL)
(72) Inventor: Weyns, Albert Frans Jean, B-9140 Temse (BE)
(74) Representative: Boelsma, Gerben Harm, Ir.

(57) **Abstract**

The invention relates to a continuously operating dough kneading machine, comprising a housing (6) with an inlet for the dough to be kneaded and any ingredient to be added and an outlet (7) for the kneaded dough, a kneading body (1) being journalled in said housing (6) about a substantially horizontal axis, said kneading body (1) having a number of straight, axially elongated arms (3,4), which extend substantially radially from the axis, said arms (3,4) being provided with passage openings (3a,4a) and being positioned angularly spaced relative to one another. In order to secure an optimal transport towards the outlet (7) of the machine in addition to an optimal kneading effect also in case of dough material that has poor flowing characteristics in the initial stage, a blade element (5) is provided on the kneading body (1) at least adjacent the inlet side, said blade element (1) exerting - when rotating along with the kneading body (1) - a downstream force (component) to the dough material.

## Description

The invention relates to a dough kneading machine, comprising a housing with an inlet for the dough to be kneaded and any ingredient to be added and an outlet for the kneaded dough, a kneading body being journalled in said housing about a substantially horizontal axis, said kneading body having a number of straight, axially elongated arms, which extend substantially radially from the axis, said arms being provided with passage openings and being positioned angularly spaced relative to one another.

Such a dough kneading machine, also called "continunous kneader", is known and adapted to be applied in a continuous production line for "baked" dough products.

Such dough kneading machines function according to the so-called "overflow principle", which means that at any moment the amount of kneaded dough discharged from the machine corresponds with the amount of dough material, that is supplied to the machine for kneading. Consequently the amount of dough material supplied to the machine is constantly adjusted to the need for kneaded dough in the dough processing equipment that is positioned downstream of the dough kneading machine in the production line.

In order to obtain an optimal kneading effect i.e. to bring the dough material from a generally sticky initial state into a state, in which the dough material has the desired elasticity, the dough material has to be subjected during a certain period of time to the kneading action of the rotating kneading arms, the speed of which is in the order of 75 r.p.m. The length of the kneading body is therefore selected such, that the residence time within the kneading machine which is required for an optimal kreading effect, will be secured with the desired (nominal) capacity (= amount of dough material that is supplied and discharged per time unit). An increase or decrease of the supply and discharge of dough material will involve a shortening or lengthening respectively of the residence time of the dough material within the machine, which shortening or lengthening of time may be compensated within certain limits by having the knaading body rotate at a correspondingly higher or lower speed.

It has been found in practice, that with certain types of dough the production of the kneading machine is not readily controllable according to the "overflow principle". Particularly in case of larger capacities, i.e. longer kneading bodies, such less readily flowing types of dough tend to a residence time which is too long, due to which the dough material will be "overkneaded" which means that the initially obtained elastic structure of the dough is undone.

The invention aims at to mitigate this drawback.

According to the invention this aim is achieved in that the kneading body is provided - at least at the inlet side - with at least one blade element, that is placed under a steep pitch angle relative to the axis of the kneading body, such that the blade element - when rotating along with the kneading body - will exert a dowstream force (component) to the dough material.

With a so designed kneading machine - in addition to the kneading action by the kneading arms, whereby the material is pressed through the passage openings of the rotating kneading arms in planes perpendicular to the axis of the kneading body - there will be also applied an axially directed impulse on the dough material, resulting in a displacement of the dough material towards the outlet and thereby supporting or initiating the "overflow effect".

The invention will be hereinafter further described by way of example with reference to the drawing.
Fig. 1 shows a perspective view of the kneading body of the kneading machine according to the invention and
fig. 2 represents a diagrammatic cross-sectional view through the kneading machine adjacent its discharge end, the displaoement body being shown in cross-section along the line II-II.

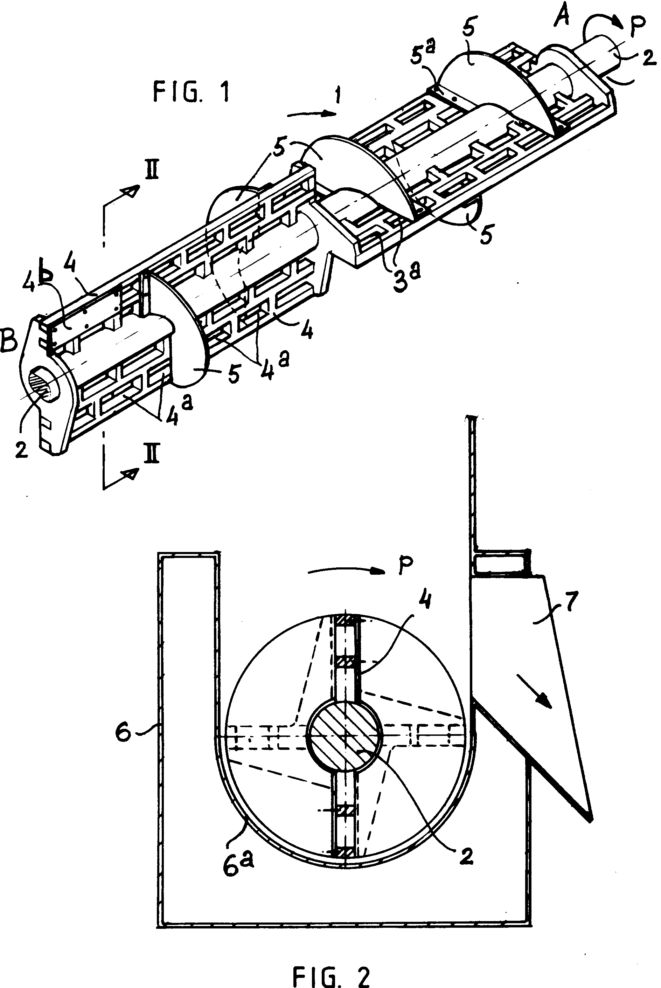

The kneading body 1 shown in fig. 1 has a shaft 2, which is provided with two diametrally extending (i.e. in radially opposite directions) extending kneading arms 3 and 4. The kneading arms 3 and 4 are positioned in axial planes, the plane of the kneading arm 3 being perpendicular to that of the kneading arm 4. The kneading arms 3 and 4 are provided with rectangular openings 3a and 4a respectively. The direction of rotation of the kneading body 1 is indicated by the arrow P, while the inlet end of the kneading body is indicated at A and the discharge end of the kneading body is indicated at B.

Sofar the kneading body is of a well-known construction.

In accordance with the present invention the kneading body is provided with a number of longitudinally spaced blade elements 5, which in the example shown are constituted by screw blades covering an angle of 180°, which screw blades are fastened to the kneading arms 3 and 4 respectively by means of flanges 5a.

The blade elements 5 provided on bath sides of the kneading arms 3 and 4 respectively have a relatively small pitch of e.g. 5 cm in case of a diameter of 30 cm of the kneading body.

The axially successive blade elements 5 on both sides of the kneading arms 3 and 4 respectively do not run into a continuous screw body, but are axially spaced, due to which the radial kneading effect of the kneading arms - by which the dough material is pressed through the openings 3a and 4a respectively - will be dominating as compared with the displacement effect of the screw blade-shaped blade elements.

Of particular importance are the blade elements 5 at the inlet A. In case of a plurality of blade elements, such as in the embodiment shown in the drawing, the spacing between the successive blade elements 5 may increase towards the outlet B.

The kneading body 1 is journalled within the housing 6 which is diagrammatically shown in fig. 2. This housing comprises a tub with a semi-cylindrical bottom 6a. The kneading body 1 is rotated by means of a drive motor (not shown in the drawing) at a speed, which in practice is about 25 r.p.m.

As shown in the drawing (fig. 1), the rearward portion of the kneading arm 4 - adjacent the inlet end B - is closed by a plate 4b, so as to effect the dissharge of the kneaded dough towards and through the outlet 7.

The invention is not limited to the example described hereinabove. It is e.g. within the scope of the present invention to provide the blade elements on the kneading body in a manner which permits an easy removal, so that they could easily be replaced by blade elements having a larger or smaller pitch.

## Claims

1. A continuously operating dough kneading machine, comprising a housing with an inlet for the dough to be kneaded and any ingredient to be added and an outlet for the kneaded dough, a kneading body being journalled in said housing about a substantially horizontal axis, said kneading body having a number of straight, axially elongated arms, which extend substantially radially from the axis, said arms being provided with passage openings and being positioned angularly spaced relative to one another, characterized in that the kneading body is provided - at least at the inlet side - with at least one blade element, that is placed under a steep pitch angle relative to the axis of the kneading body, such that the blade element - when rotating along with the kneading body - will exert a downstream force (component) to the dough material.

2. A kneadig machine according to claim 1, characterized in that the blade elements have the shape of screw blades.

3. A kneading machine according to claim 2, characterized in that the screw blade elements cover an angle of 180°.

4. A kneading machine according to claim 3, characterized in that the screw blade elements are fastened to an axial plane of a kneading arm that extends diametrally with to the axis of the kneading body.

5. A kneading machine according to claim 4, charactrerized in that screw blade elements are placed on both sides of the diametrally positioned kneading arms and that there is an axial spacing between the screw blade elements as seen in the travel direction of the dough material.

6. A kneading machine according to claim 5, characterized in that the axial spacing increases as seen in the travelling direction.

7. A kneading machine according to claim 6, characterized in that the blade elements are easily detachably mounted to the kneading body.
